(19) **Europäisches Patentamt**

**European Patent Office**

**Office européen des brevets**

(11) Veröffentlichungsnummer : **0 053 285 B2**

(12) # NEUE EUROPÄISCHE PATENTSCHRIFT

(45) Veröffentlichungstag der neuen Patentschrift :
20.03.91 Patentblatt 91/12

(21) Anmeldenummer : 81109115.6

(22) Anmeldetag : 28.10.81

(51) Int. Cl.⁵ : **B05D 3/04, B05D 1/26, C08J 7/00, B32B 27/00**

(54) **Verfahren und Vorrichtung zum Oxydieren eines extrudierten schmelzflüssigen Polyäthylenfilms.**

(30) Priorität : 02.12.80 DE 3045413

(43) Veröffentlichungstag der Anmeldung :
09.06.82 Patentblatt 82/23

(45) Bekanntmachung des Hinweises auf die
Patenterteilung :
05.02.86 Patentblatt 86/06

(45) Bekanntmachung des Hinweises auf die
Entscheidung über den Einspruch :
20.03.91 Patentblatt 91/12

(84) Benannte Vertragsstaaten :
FR GB IT

(56) Entgegenhaltungen :
DE-A- 2 053 722
DE-A- 2 304 446
DE-U- 7 423 544

(56) Entgegenhaltungen :
FR-A- 1 458 436
GB-A- 1 011 624
US-A- 3 339 234
PAPER, FILM & FOIL CONVERTER, January
1979, Seiten 94 und 97
Sonderdruck aus Kunststoff-Journal, Oktober
1974

(73) Patentinhaber : TETRA PAK INTERNATIONAL
AB
Fack 1701
S-221 01 Lund 1 (SE)

(72) Erfinder : Blom, Fritz
Esch 5
W-4540 Lengerich i.W. (DE)

(74) Vertreter : LOUIS, PÖHLAU, LOHRENTZ &
SEGETH
Kesslerplatz 1 Postfach 3055
W-8500 Nürnberg-1 (DE)

**Beschreibung**

Die Erfindung betrifft ein Verfahren zum Oxydieren eines extrudierten schmelzflüssigen Polyäthylenfilms vor seinem Verpressen mit einer Trägerbahn zwischen einer Andrückwalse und einer Kühlwalse zum Zwecke des Verbindens mit dieser, bei dem Ozon in den durch die Trägerbahn und den Polyäthylenfilm gebildeten Spalt geleitet wird, sowie eine Vorrichtung zur Durchführung dieses Verfahrens. Ein Verfahren und eine Vorrichtung dieser Art sind aus der DE-U-74 23 544 bekannt.

Bei der Beschichtung von Papier- und Kunststoffbahnen sowie von Metallfolien mit Polyäthylen ergibt sich das Problem, die extrudierte Polyäthylenschicht sicher mit der Trägerbahn zu verbinden. Um eine gute Haftung des schmelzflüssigen bzw. plastischen Polyäthylenfilms auf der Trägerbahn zu erzielen, ist es bekannt, die Oberfläche der Trägerbahn durch Korona-Funkenentladungen vorzubehandeln oder eine Zwischenschicht auf die Trägerbahn aufzubringen, die sich sowohl gut mit dieser als auch der Polyäthylenschicht verbindet.

Die Korona-Funkenentladungsbehandlung vermag nicht in allen Fällen eine befriedigende Verbundhaftung herbeizuführen und das Aufbringen einer die Verbindung bewirkenden Zwischenschicht bedingt nicht nur einen zusätzlichen Herstellungsaufwand, derartige Zwischenschichten vermögen ihre die Haftung vermittelnden Eigenschaften voll auch erst nach Stunden zu entwickeln.

Es ist bekannt, daß eine Oxydation des extrudierten Polyäthylenfilms unmittelbar vor dessen Aufbringen auf die Trägerbahn zu einer guten Haftung führt. Zur Vermeidung der vorstehend angegebenen Nachteile der bekannten Verfahren zur Haftvermittlung ist daher bereits ein Verfahren vorgeschlagen worden, bei dem der extrudierte Polyäthylenfilm mit Ozon angeblasen wird, um diesen zu oxydieren. Ozon stellt eines der stärksten Oxydationsmittel dar, weil dieses insbesondere unter Wärmeeinwirkung leicht zerfällt und dabei hochreaktionsfähiger atomarer Sauerstoff frei wird.

Nachteilig ist bei diesen bekannten Verfahren jedoch, daß das Ozon in der beispielsweise aus der DE-U-74 23 544 ersichtlichen Weise gegen den gerade extrudierten Polyäthylenfilm oberhalb des zwischen der Andrückwalse und der Kühlwalse gebildeten Spalts geblasen oder unmittelbar in den Spalt eingeblasen wird. Diese Art des Anblasens mit Ozon führt vermutlich deshalb zu keiner guten Verbundhaftung, weil aufgrund der in und oberhalb des Spalts herrschenden turbulenten Strömungen das Ozon nicht in ausreichendem Maße mit den zu oxydierenden Oberflächenschichten in Berührung kommt und weil das Ozon durch die zu jedem Extruder gehörende Absaugeinrichtung zusammen mit den Polyäthylendämpfen ungenutzt abgesogen wird.

Aufgabe der Erfindung ist es daher, ein Verfahren und eine Vorrichtung vorzuschlagen, die das Einblasen von Ozon in einer Weise ermöglichen, daß die Oberflächenschichten zur Erzielung einer guten Verbundwirkung ausreichend oxydiert werden.

Erfindungsgsmäß wird diese Aufgabe bei einem Verfahren der eingangs angegebenen Art dadurch gelöst, daß das Ozon etwa in tangentialer Richtung auf die Andrückwalse und im wesentlichen in Laufrichtung der Trägerbahn auf diese in deren in den Spalt einlaufenden Bereich derart geblasen wird daß eine von der Tragerbahn mitbewegte, oberflächennahe Laminare Strömung gebildet wird. Untersuchungen haben bestätigt, daß bei dieser Art der Einleitung des Ozons eine gute Oxydation der Oberflächenschichten un damit eine gute Verbundhaftung erzielt wird. Vermutlich läßt sich nach dem erfindungsgemäßen Verfahren die gute Verbundhaftung dadurch erreichen, daß die von der Trägerbahn mitbewegte oberflächennahe laminare Strömung des Ozons tief in den Spalt einwandert und anschließend durch die am Extruder angeordnete Absaugeinrichtung entlang der heißen Polyäthylen-Schmelzfahne nach oben hin abgesogen wird. Da nach dem erfindungsgemäßen Verfahren das Ozon in die oberflachennahe laminare Luftströmung der Trägerbahn eingeblasen wird bzw. eine derartige laminare oberflächennahe Luftströmung bildet, wird sowohl die Oberfläche der Trägerbahn als auch der Film aus Polyäthylenschmelze intensiv mit hochaktivem Ozon beaufschlagt. Das erfindungsgemäße Anblasen der Trägerbahn mit Ozon ist insbesondere dann vorteilhaft, wenn diese aus einer Kunststoffbahn, beispielsweise aus Polypropylen oder auch aus Zellglas besteht.

Bei einer Vorrichtung zur Durchführung des erfindungsgemäßen Verfahrens mit einer Andrückwalze und einer eine Gegendruckwalze bildenden Kühlwalze, mit einer oberhalb des durch die beiden Walzen gebildeten Spalts angeordneten Breitschlitzextrusionsdüse und mit einer Ozondüse, die aus einem oberhalb der Trägerbahn parallel zur Achse des Andrückwalze und im Auflaufbereich der Trägerbahn auf diese angeordneten und die Trägerbahn berührenden oder nahe zü berührenden Rohr mit in einer Reihe angeordneten Blasdüsen besteht, ist erfindungsgsmäß vorgesehen, daß die Blasrichtung der Blasdüesen zur Bildung einer von der Trägerbahn mitbewegten, oberflächennahen luminaren Ströminung des auf geblasenen Ozons etwa tangential auf die Andrückwal zegerichtet ist. Statt der Reihe von Blasdüsen kann das Rohr auch mit einer oder mehreren schlitzförmigen Blasdüsen versehen sein.

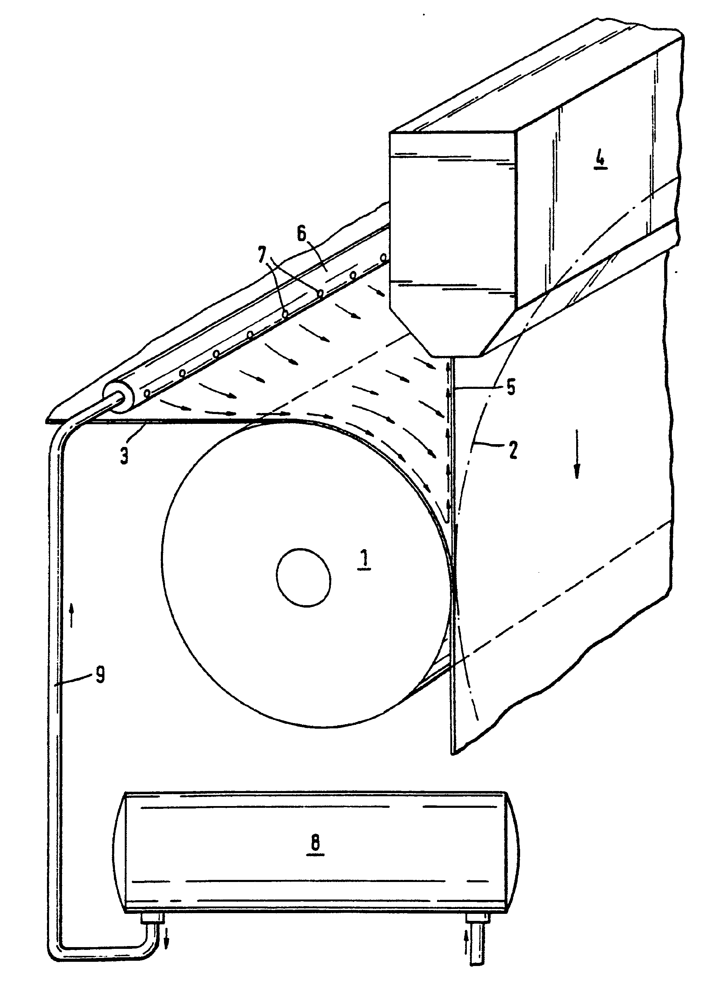

Ein Ausführungsbeispiel der Erfindung wird nachstehend anhand der Zeichnung, in deren einziger Figur eine Seitenansicht der Vorrichtung zum Oxydieren der miteinander zu verbindenden Bahnen in perspektivischer Darstellung gezeigt ist, näher erläutert.

Über nicht dargestellte Führungs- und Abzugswalzen läuft eine Trägerbahn 3 aus Papier über die Andrückwalze 1, die gegen eine Kühlwalze 2 angestellt ist. Oberhalb des zwischen der Andrückwalze 1 und der Kühlwalze 2 gebildeten Spalts ist die Breitschlitzdüse eines nur schematisch angedeuteten Extruders 4 angeordnet. Aus der Breitschlitzdüse wird in der dargestellten Weise ein schmelzflüssiger Polyäthylenfilm extrudiert, der in dem Spalt mit der Trägerbahn 3 zusammenläuft.

Zur Oxydation der Oberflächen ist oberhalb der Trägerbahn 3 dicht vor der Andrückwalze 1 ein Blasrohr 6 vorgesehen, das im gleichen Abstand voneinander mit einer Reihe von Blasdüsen 7 versehen ist. Der aus den Düsen 7 austretende Gasstrom ist etwa tangential auf die Andrückwalze 1 gerichtet.

Das aus den Düsen 7 austretende Ozon wird in dem Ozonerzeuger 8 gebildet und über die Leitung 9 dem Blasrohr 6 zugeführt. Wie aus der Zeichnung ersichtlich ist, ist das Blasrohr 6 so angeordnet, daß der aus den Düsen 7 austretende Ozonstrom in den von der Trägerbahn 3 mitbewegten laminaren Luftstrom gelangt bzw. diesen ersetzt. Die eingezeichneten Pfeile markieren dabei den Weg des Ozonstromes, dessen eingezeichneter Verlauf durch Erzeugung von Rauchfäden im Versuch nachgewiesen wurde. Der Ozonstrom legt sich also zunächst dicht auf die Oberfläche der Trägerbahn 3 und wandert in der gezeigten Weise in den Spalt ein. In dem Spalt kehrt er seine Richtung um und strömt entgegen der Laufrichtung des extrudierten Polyäthylenfilms 5 über deren Oberfläche. Der Ozonstrom wird sodann von den nicht dargestellten Absaugeinrichtungen des Extruders abgezogen.

## Ansprüche

1. Verfahren zum Oxydieren eines extrudierten schmelzflüssigen Polyäthylenfilms vor seinem Verpressen mit einer Trägerbahn (3) zwischen einer Andrückwalze (1) und einer Kühlwalze (2) zum Zwecke des Verbindens mit dieser, bei dem Ozon in den durch die Trägerbahn (3) und den Polyäthylenfilm gebildeten Spalt geleitet wird, **dadurch gekennzeichnet**, dass das Ozon in etwa tangentialer Richtung auf die Andrückwalze (1) und im wesentlichen in Laufrichtung der Trägerbahn (3) auf diese in deren in den Spalt einlaufenden Bereich derart geblasen wird, daß eine von der Trägerbahn mitbewegte, oberflächennahe laminare Strömung gebildet wird.

2. Vorrichtung zur Durchführung des Verfahrens nach Anspruch 1 mit einer Andrückwalze (1) und einer eine Gegendruckwalze bildenden Kühlwalze (2), mit einer oberhalb des durch die beiden Walzen gebildeten Spaltes angeordneten Breitschlitz-Extrusionsdüse und mit einer Ozondüse, die aus einem oberhalb der Trägerbahn (3) parallel zur Achse der Andrückwalze (1) und im Auflaufbereich der Trägerbahn auf diesen angeordneten und die Trägerbahn berührenden oder nahezu berührenden Rohr (6) mit in einer Reihe angeordneten Blasdüsen (7) besteht, **dadurch gekennzeichnet**, dass die Blasrichtung der Blasdüsen (7) zur Bildung einer von der Trägerbahn (3) mitbewegten, oberflächennahen laminaren Strömung des aufgeblasenen Ozons etwa tangential auf die Andrückwalze (1) gerrichtet ist.

3. Vorrichtung nach Anspruch 2, **dadurch gekennzeichnet**, dass das Rohr (6) mit einer oder mehreren schlitzförmigen Blasdüsen versehen ist.

## Claims

1. A process for oxidising an extruded molten polyethylene film before it is pressed against a backing web (3) between a pressure-applying roller (1) and a cooling roller (2) for the purposes of connection to same, wherein ozone is passed into the gap formed by the backing web (3) and the polyethylene film, characterised in that the ozone is blown in an approximately tangential direction on to the pressure-applying roller (1) and is blown substantially in the direction of travel of the backing web (3) on to same in the region thereof which passes into the gap, in such a way that a laminar flow which is entrained by the backing web and which is close to the surface is formed.

2. Apparatus for carrying out the process according to claim 1 comprising a pressure-applying roller (1) and a cooling roller (2) which constitutes a backing roller, a wide-slot extrusion nozzle disposed above the gap formed by the two rollers, and an ozone nozzle which comprises a tube (6) with blowing nozzles (7) arranged in a row, which tube is arranged above the backing web (3) parallel to the axis of the pressure-applying roller (1) and in the region in which the backing web runs on to the pressure-applying roller, which tube contacts or almost contacts the backing web, characterised in that the blowing direction of the blowing nozzles (7) is directed approximately tangentially on to the pressure-applying roller (1), to form a laminar flow of the blown-on ozone which is entrained by the backing web (3) and which is close to the surface.

3. Apparatus according to claim 2 characterised in that the tube (6) is provided with one or more slot-shaped blowing nozzles.

## Revendications

1. Procédé pour l'oxydation d'un film de polyéthylène fondu extrudé avant d'être pressé contre une bande de support (3) entre un rouleau de pression (1) et un rouleau de refroidissement (2) pour relier le film à la bande de support, de l'ozone étant introduit dans la fente formée par la bande de support (3) et le film de polyéthylène, caractérisé en ce que l'ozone est soufflé à peu près en direction tangentielle sur le rouleau pressoir (1) et sur la bande, essentiellement en direction de la marche de la bande de support (3) et sur la zone de cette dernière entrant dans la fente, de telle sorte qu'un courant laminaire proche de la surface et se déplaçant avec la bande de support soit créé.

2. Dispositif pour l'exécution du procédé selon la revendication 1 comportant un rouleau de pression (1) et un rouleau de refroidissement (2) formant un rouleau de contrepression, une buse d'extrudeuse à fente large disposée au-dessus de la fente formée par les deux rouleaux et une buse d'ozone disposée au-dessus de la bande de support (3) parallèlement à l'axe du rouleau de pression (1) et dans la zone d'arrivée de la bande de support sur ce dernier et consistant en un tuyau (6) comportant des buses de soufflage (7) disposées en ligne et touchant ou touchant presque la bande de support (3), caractérisé en ce que la direction de soufflage des buses (7), pour la création d'un courant laminaire d' ozone soufflé proche de la surface et se déplaçant avec la bande de support (3) est orientée à peu près tangentiellement par rapport au rouleau de pression (1).

3. Dispositif selon la revendication 2, caractérisé en ce que le tuyau (6) est pourvu d'une ou plusieurs buses de soufflage en forme de fente.